# EUROPÄISCHE PATENTSCHRIFT

(11) **EP 2 333 636 B1**
(45) Veröffentlichungstag und Bekanntmachung des Hinweises auf die Patenterteilung: **06.03.2019**
(21) Anmeldenummer: 10189565.4
(22) Anmeldetag: 01.11.2010
(51) Int. Cl.: G06F 1/16

(54) **Mobiles Interface und System zur Steuerung von Fahrzeugfunktionen**
Mobile interface and system for controlling vehicle functions
Interface mobile et système de commande de fonctions de véhicule

(30) Priorität: 03.12.2009 DE 102009056786
(43) Veröffentlichungstag der Anmeldung: 15.06.2011
(73) Patentinhaber: Continental Automotive GmbH, 30165 Hannover (DE)
(72) Erfinder: Bosch, Ralf, 78083 Dauchingen (DE); Rombach, Gerhard, 78098 Triberg (DE)

(56) Entgegenhaltungen:
- DE-A1-102007 038 690
- US-A1- 2007 038 434
- US-A1- 2008 168 205
- US-A1- 2009 285 000
- SILEX TECHNOLOGY: "wiDock wireless dock for iPod", 20060101, [Online] 1. Januar 2006 (2006-01-01), Seiten 1-2, XP007918004, Gefunden im Internet: URL:http://www.silexamerica.com/products/d ata_sheets/widock_datasheet.pdf> [gefunden am 2011-03-29]

## Beschreibung

Die Erfindung betrifft ein mobiles Interface-Gerät zur Steuerung einer Mehrzahl von Fahrzeugfunktionen über ein mit dem Fahrzeug verbundenes Steuergerät, mit einer Eingabevorrichtung, Mitteln zum drahtlosen Datenaustausch und einem Energiespeicher, sowie ein System zur mobilen Ansteuerung von Fahrzeugfunktionen mit einem Steuergerät und einem mobilen Interface-Gerät.

Das Dokument "wiDock wireless dock for iPod" (SILEX TECHNOLOGY, 01-01-2006) offenbart eine sogenannte Dockingstation zur Übertragung von Content in Form von Liedern und Videos von und zu einem iPod des Herstellers Apple. Die Dockingstation wiDock ermöglicht kabellose Synchronisierung des iPod mit iTunes bei gleichzeitiger Einbindung in das heimische Entertainmentsystem, welcher über IEEE.802.11b/g ein kabelloses Netzwerk ausbilden kann. Hierbei synchronisiert die Dockingstation das eingesteckte iPod drahtlos mit einem Computer und kann die Batterie des iPods laden.

Das Dokument US 2007 038434 offenbart ein System, das in einem Fahrzeug eingebaut werden kann. Dieses System weist mehrere Speicherschnittstellen und Speicher auf, um verschiedene Endgeräte aufzunehmen und über eine Fernbedienung zu steuern. Die Endgeräte können über die Schnittstellen des Systems in einem Fahrzeug derart angebunden sein, dass durch eine Signal-umwandlung und Funktionsanpassung Fahrzeugkomponenten zur Wiedergabe von Informationen herangezogen werden können.

Nach dem Stand der Technik sind bereits mobile Interface-Geräte zur Steuerung von Fahrzeugfunktionen bekannt. Diese weisen jedoch einen relativ kleinen Funktionsumfang auf und beschränken sich üblicherweise auf Komfortfunktionen des Fahrzeugs.

Eine solche Beschränkung ist unvorteilhaft, da beispielsweise auch das Bedürfnis besteht weitere Funktionen wie das Abrufen von sicherheitsrelevanten Fahrzeugfunktionen fernzusteuern.

Besonders unvorteilhaft ist eine Beschränkung auf Komfortfunktionen im Nutzfahrzeugmarkt, denn mit mobilen Interface-Geräten nach dem Stand der Technik können keine Nutzfahrzeugfunktionen gesteuert werden.

Für einige Nutzfahrzeugfunktionen sind zwar auch Fernsteuerungen bekannt, hierbei handelt es sich jedoch um Einzellösungen, welche zur Steuerung von genau einer bestimmten Funktion geeignet sind.

Die Aufgabe der Erfindung besteht daher darin, ein mobiles Interface-Gerät sowie ein System zur mobilen Ansteuerung von Fahrzeugfunktionen zu ermöglichen, welches einen vergrößerten Funktionsumfang aufweist.

Erfindungsgemäß wird die Aufgabe durch ein System nach Anspruch 1 gelöst. Vorteilhafte Weiterbildungen werden in den abhängigen Ansprüchen genannt.

Dadurch, dass die Mittel zum drahtlosen Datenaustausch mit einer im mobilen Interface-Gerät integrierten Datenverarbeitungseinheit verbunden sind, welche zur Anwendung mindestens eines kryptologischen Verfahrens ausgebildet ist, sind deutlich mehr Fahrzeugfunktionen fernsteuerbar, da auch Funktionen gesteuert werden können, welche nach dem Stand der Technik aus Sicherheitsgrünen nur über eine kabelgebundene Ansteuerung oder über eine separate Fernbedienung gesteuert werden konnten.

Beispielhaft für steuerbare Funktionen seien eine Betätigung eines Fahrzeugschließsystems, eines am Fahrzeug montierten Krans, einer anhebbaren Beladeklappen von LKWs, einer Hebebühne, eines Navigationssystems sowie eine Betätigung von Infotainmentsystemen, Navigationssystemen und/oder Komfortfunktionen genannt. Es sei darauf hingewiesen dass mit einer Mehrzahl von Funktionen gemeint ist, dass Funktionen einer Mehrzahl verschiedener Geräte eines Fahrzeugs angesteuert werden können.

Die Mittel zum drahtlosen Datenaustausch können beispielsweise als WLAN, ZigBee und/oder BlueTooth Schnittstelle ausgebildet sein und vorteilhaft eine Reichweite zwischen 5m und 1km, besonders vorteilhaft zwischen 10m und 300m aufweisen. So ist ein drahtloser Datenaustausch mit einem im Fahrzeug integrierten Steuergerät auch von außerhalb des Fahrzeugs möglich. Vorteilhaft kann eine Reichweite von einer zu aktivierenden Fahrzeugfunktion abhängen, insbesondere derart, dass eine Sendeleistung der Mittel zum drahtlosen Datenaustausch bei einigen, vorteilhaft besonders sicherheitsrelevanten, Fahrzeugfunktionen reduziert ist.

Als kryptologische Verfahren können vorzugsweise sicherheitstechnische Verfahren angesehen werden, welche die Eigenschaften Integrität, Authentizität und/oder Vertraulichkeit erfüllen.

Vorteilhaft weist das Interface-Gerät eine Anzeigevorrichtung auf. Hierdurch ist es möglich, nicht nur Vorgänge zu steuern, sondern auch Informationen vom Fahrzeug abzurufen und anzuzeigen. Beispielsweise können Informationen zur Überwachung der Ausführung einer Fahrzeugfunktion abgerufen werden.

In einer vorteilhaften Ausführungsform beinhaltet das Interface-Gerät mindestens einen Datenspeicher. Bei einem solchen Speicher kann es sich insbesondere um eine nichtflüchtige Massenspeichereinheit handeln. Ein solcher kann vorteilhaft als Flash-Speicher ausgebildet sein. Besonders vorteilhaft ist der Datenspeicher als sicherer Datenspeicher ausgebildet. Hierzu kann der Datenspeicher zum verschlüsselten Speichern von Daten ausgelegt sein.

Vorteilhaft ist das Interface-Gerät zum Speichern von Nutzerprofilen auf dem Datenspeicher ausgebildet. In den Nutzerprofilen können Einstellungen zur Veränderung einer Menüführung zur Steuerung von Fahrzeugfunktionen beinhaltet sein. Beispielsweise können einige Tasten individuell vom Nutzer mit für Ihn wichtigen Funktionen belegt werden. Hierdurch wird eine verbesserte Anpassung an ein durch den Nutzer vorgegebenes Anforderungsprofil an das Interface-Gerät gegeben. Außerdem kann das Interface-Gerät auch dazu ausgebildet sein, im Nutzerprofil zusätzlich Informationen über den Nutzer zu speichern, welche nicht direkt die Bedienung des Interface-Geräts betreffen. So können beispielsweise Einstellungen einer Sprachsteuerung mit im Nutzerprofil gespeichert sein.

Vorteilhaft können auch mehrere verschiedene Nutzerprofile auf dem Datenspeicher gespeichert werden. Ein zu verwendendes Nutzerprofil wird dann vorteilhaft beim Start des Interface-Geräts abgefragt und kann auch während des Betriebs umgestellt werden.

Auf dem Datenspeicher können vorteilhaft auch aktualisierte Programme und/oder Treiber für in einem Fahrzeug integrierte oder mit einem Fahrzeug verbundene Geräte gespeichert werden. Das Interface-Gerät kann vorteilhaft zum Übertragen der Treiber und/oder aktualisierten Programme an ein Steuergerät zur Weiterleitung an ein Zielgerät ausgebildet sein. Außerdem können auf dem Datenspeicher aufgezeichnete Tachographendaten gespeichert werden.

In einer weiteren vorteilhaften Ausführungsform ist die Datenverarbeitungseinheit derart ausgebildet, dass sie nicht nur ein Steuern von Fahrzeugfunktionen, sondern auch von Funktionen von weiteren an das Fahrzeug angeschlossenen Vorrichtungen ermöglicht. Hierzu ist die Datenverarbeitungseinheit zum Übermitteln von Steuerbefehlen für weitere an das Fahrzeug angeschlossene Vorrichtungen über die Mittel zum drahtlosen Datenaustausch an ein Steuergerät, welches die Steuerbefehle dann weiterleiten kann, ausgebildet.

Nötige Steuerinformationen können vorteilhaft nachträglich in das Interface-Gerät gespeichert werden, so dass ein Funktionsumfang des Interface-Geräts einem, beispielsweise durch Nachrüsten des Fahrzeugs oder Anschließen von zusätzlichen Geräten, veränderten Funktionsumfang jederzeit angepasst werden kann. Vorteilhaft kann das Interface-Gerät jedoch bereits die nötigen Steuerbefehle für eine Vielzahl von nachrüstbaren Komponenten für das Fahrzeug beinhalten, sodass ein nachträgliches Nachrüsten nur in Sonderfällen notwendig ist.

In einer besonders vorteilhaften Ausführungsform ist das Interface-Gerät zur Steuerung einer Fahrzeugschließanlage ausgebildet, wobei jedoch vorteilhaft die Datenverarbeitungseinheit derart ausgebildet ist, dass kryptologische Verfahren nicht nur beim Steuern einer Fahrzeugschließanlage, sondern auch beim Steuerung von weiteren Fahrzeugfunktionen verwendbar sind.

Vorteilhaft ist die Datenverarbeitungseinheit zum Verwenden mehrerer verschiedener kryptologischer Verfahren ausgebildet. Es ist beispielsweise eine Ausbildung zur Verwendung von symmetrischen und/oder von asymmetrischen Verschlüsselungsverfahren möglich. In einer vorteilhaften Ausführungsform kann die Datenverarbeitungseinheit zur Verschlüsselung durch DES und/oder RSA ausgebildet sein. Besonders vorteilhaft derart, dass jeweils beim Einschalten des Interface-Geräts ein durch ein asymmetrisches Verfahren wie RSA verschlüsselter Sitzungsschlüssel übermittelt wird, welcher anschließend zur symmetrischen Verschlüsselung, beispielsweise durch DES, verwendet wird. Ein Beispiel eines Verfahrens, bei dem eine Nachricht symmetrisch verschlüsselt übertragen wird, während der Schlüssel asymmetrisch verschlüsselt mit der Nachricht übertragen wird, ist das PGP-Verfahren (Pretty Good Privacy).

Außer einer Ausbildung der Datenverarbeitungseinheit zur Verwendung von Verschlüsselungsverfahren ist auch eine Ausbildung für andere kryptologische Verfahren denkbar. Beispielsweise kann die Datenverarbeitungseinheit zum Erstellen und Prüfen von digitalen Signaturen, zur Verwendung von Hashfunktionen und/oder zur Verwendung verschiedenen Authentifizierungsverfahren wie beispielsweise Challenge-Response-Authentifizierung.

Vorteilhafterweise kann die Datenverarbeitungseinheit zur Verwendung eines Zwei- oder Drei-Faktor-Authentifizierungsverfahrens ausgebildet sein. Hierunter ist zu verstehen, dass zur Authentifizierung nicht nur eine Information notwendig ist, wie beispielsweise ein Schlüssel eines Verschlüsselungsverfahrens, sondern zugleich auch die Anwesenheit eines bestimmten Objekts und/oder der Nachweis eines bestimmten biometrischen Merkmals.

Hierzu beinhaltet das Interface-Gerät vorteilhaft eine zusätzliche Sicherheitsvorrichtung. Diese kann beispielsweise als SmartCard-Controller ausgebildet sein, wobei zur Übermittlung von korrekt signierten Steuerbefehlen, insbesondere für sicherheitsrelevante Steuerbefehle, vorzugsweise eine vorgegebene SmartCard in den Controller eingesteckt sein muss. Um ein besonders hohes Sicherheitsniveau zu erreichen kann hierbei vom Prinzip der Geheimnisteilung gebrauch gemacht werden. Hierzu kann das Interface-Gerät dazu ausgebildet sein, nur einen Teil eines zur Signierung und/oder Verschlüsselung notwendigen Codes zu Speichern, wobei ein zweiter Teil des Codes vom Smart-Card-Controller eingelesen wird. Ein weiteres Beispiel zusätzlicher Sicherheitseinrichtungen sind Iris- oder Fingerabruckerkenner.

Eine weitere mögliche zusätzliche Sicherheitsvorrichtung ist ein Gehäuseschutz. Dieser kann zum Erkennen eines Öffnens des Gehäuses des Interface-Geräts und zum Einleiten von dann notwendigen Sicherheitsmaßnahmen ausgebildet sein. Eine solche Sicherheitsmaßnahme kann das Löschen von sicherheitsrelevanten Daten oder ein Sperren des Interface-Geräts sein.

Vorteilhaft kann zur Steuerung einer Fahrzeugschließanlage ein anderes kryptologisches Verfahren verwendet werden als für andere Steuerbefehle. Es sei erwähnt, dass das Interface-Gerät nicht zwangsläufig dazu ausgebildet sein muss, dass jegliche Steuerbefehle für Fahrzeugfunktionen durch ein kryptologisches Verfahren verschlüsselt übertragen werden. Vielmehr kann es von Vorteil sein, wenn nur sicherheitsrelevante Steuerbefehle verschlüsselt übertragen werden.

In einer vorteilhaften Ausführungsform ist die Datenverarbeitungseinheit dazu ausgebildet, Funktionen des Bordcomputers anzusteuern und zu aktivieren. Hierdurch können beispielsweise im Fahrzeug verwendete Systeme überprüft und eventuell bestehende Fahrzeugprobleme diagnostiziert werden. Hierzu können Messwerte von im Fahrzeug verbauten Sensoren abgerufen werden. Außerdem können verschiedene Nutzereinstellungen, beispielsweise Einstellungen von Komfortfunktionen des Fahrzeugs, verändert werden. Alternativ oder zusätzlich kann die Datenverarbeitungseinheit dazu ausgebildet sein, Funktionen des Bordcomputers komplett zu übernehmen. Dies ermöglicht es auf die Funktionen zuzugreifen, ohne dass der Bordcomputer selbst aktiv ist.

In einer besonders vorteilhaften Ausführungsform ist das Interface-Gerät zugleich als Mobiltelefon und/oder PDA ausgebildet. Hierdurch ergeben sich erhebliche Einspaarungen gegenüber einer Verwendung von separaten Geräten, da viele Komponenten somit eine Doppelfunktion erfüllen können. Beispielsweise kann eine Anzeigevorrichtung, welche beispielsweise als Touchscreen ausgebildet sein kann, sowohl zur Anzeige von SMS, MMS und eingehenden Anrufen, als auch zur Anzeige von aktivierbaren Fahrzeugfunktionen verwendet werden. In eine Antenne zur Anbindung an ein Mobilfunknetz können die Mittel zum drahtlosen Datenaustausch mit einem Steuergerät integriert werden. Insgesamt ergibt sich hierdurch sowohl ein Kosten- als auch ein Komfortvorteil, denn somit ist ein Mitführen eines zusätzlich anfallenden Gerätes nicht notwendig.

Alternativ kann das Interface-Gerät auch nur ähnlich wie ein Mobiltelefon oder PDA ausgebildet sein. Beispielsweise kann das Interface-Gerät ein Anschluss für ein Ladegerät, die Ausbildung mit einem Touchpad und/oder die Ausbildung zur Verwendung eines Betriebssystems, wie für Mobiltelefone und/oder PDAs nach dem Stand der Technik bekannt, aufweisen.

In einer weiteren vorteilhaften Ausführungsform ist die Datenverarbeitungseinheit mit mindestens einer im Interface-Gerät integrierte Schnittstelle zum Auslesen und/oder Beschreiben von Karten und/oder mobilen Speichermedien verbunden. Eine solche Schnittstelle kann beispielsweise dazu dienen, dem Interface-Gerät zur Steuerung von neu an das Fahrzeug angeschlossenen Vorrichtungen benötigte Daten zur Verfügung zu stellen.

Eine weitere Schnittstelle kann zum Auslesen einer Fahrerkarte ausgebildet sein. Derartige Fahrerkarten werden üblicherweise für Tachographen verwendet. Da, aufgrund der Ausbildung der Datenverarbeitungseinheit zum Verwenden von kryptologischen Verfahren, eine Übertragung hinreichend zuverlässist, ist ein Einschieben der Fahrerkarte in einen Tachographen nicht mehr notwendig. Dies vereinfacht die Benutzung des Tachographen, da auf ein manuelles Zugreifen auf diesen vorteilhaft komplett verzichtet werden kann, denn sowohl die Steuerung des Tachographen als auch das Zugreifen auf die Fahrerkarte kann über das mobile Interface-Gerät erfolgen.

Dies ermöglicht auch, eine vorteilhaftere Anordnung von Instrumenten im Cockpit von Nutzfahrzeugen, da der Tachograph nicht mehr zwingend an einer gut zugänglichen Stelle eingebaut werden muss. Hierdurch wird Platz für bei der Fahrt benötigte Instrumente frei.

Außerdem kann so ein Nutzerprofil des Interface-Geräts automatisch anhand einer eingeschobenen Fahrerkarte gewählt werden.

Zusätzlich kann das Interface-Gerät eine USB Schnittstelle aufweisen. Über diese kann das Interface-Gerät zwecks Übertragung von Daten beispielsweise an einen Computer oder Notebook angeschlossen werden.

Des Weiteren kann das Interface-Gerät eine Aufnahme für eine SIM-Karte aufweisen. Eine solche ist insbesondere bei Ausbildung des Interface-Geräts als Mobiltelefon notwendig.

Eine weitere Erhöhung des Komforts ist möglich, indem das mobile Interface-Gerät zum schlüssellosen Identifizieren ausgebildet wird. Durch eine derartige Ausbildung als sicheres "Identifikation-Tool" ist es möglich auf eine Vielzahl von Funktionen zuzugreifen die sonst einer Identifizierung durch einen Schlüssel bedürften. Beispielsweise können verschiedene Fahrzeug-Aggregate aktiviert oder deaktiviert werden. Außerdem kann eine Zugangskontrolle zu gesicherten Bereichen des Fahrzeugs durch das Interface-Gerät erfolgen.

In einer besonders vorteilhaften Ausführungsform ist das Interface-Gerät derart ausgebildet, dass sogar ein Identifizieren zum Herstellen einer Bankverbindung durch das Interface-Gerät möglich ist. Hierzu beinhaltet das Interface-Gerät vorteilhaft eine als Bankkartenleser ausgebildete Schnittstelle. Bezahlvorgänge, beispielsweise an Tankstellen, werden so deutlich vereinfacht. Dies verringert den Zeitbedarf für Tankvorgänge was, über eine Gesamtlebensdauer eines erfindungsgemäßen Interface-Geräts gerechnet, zu erheblichen Einsparungen führt.

Vorzugsweise können die Mittel zum drahtlosen Datenaustausch zum automatischen Deaktivieren bei einem Fahrtbeginn ausgebildet sein. Hierdurch werden eventuelle Störungen des Fahrzeugs durch die Mittel zum drahtlosen Datenaustausch zuverlässig vermieden.

Das Interface-Gerät beinhaltet vorteilhaft eine kabelbasierte Schnittstelle. Hierdurch kann das mobile Interface-Gerät auch über einen direkten Anschluss mit dem Steuergerät verbunden werden. Unter "kabelbasiert" ist hier nicht zwangsläufig eine Öffnung zum einschieben eines Kabelsteckers zu verstehen. Vielmehr sind in einer besonders vorteilhaften Ausführungsform Kontakte zum Einführen des mobilen Interface-Geräts in eine Dockingstation vorgesehen. Hierdurch ist eine Verwendung des Interface-Geräts, während die Mittel zum drahtlosen Datenaustausch deaktiviert sind, möglich. Durch eine Verbindbarkeit mit einer Dockingstation ist es außerdem möglich, das Interface-Gerät zugleich als Zündschlüssel auszubilden, denn aus Sicherheitsgründen währe es trotz verschlüsselter Übertragung zumeist nicht wünschenswert eine drahtlose Aktivierung der Zündvorrichtung zu ermöglichen.

Des Weiteren betrifft die Erfindung auch ein System zur mobilen Ansteuerung von Fahrzeugfunktionen. Ein solches System beinhaltet zumindest ein Interface-Gerät und ein mit dem Fahrzeug verbundenes oder verbindbares Steuergerät. Das Steuergerät und das Interface-Gerät sind zum Datenaustausch miteinander ausgebildet, wobei sowohl das Steuergerät als auch das Interface-Gerät zum Verwenden von kryptologischen Verfahren beim Datenaustausch ausgebildet sind. Das Steuergerät ist dazu ausgebildet, abhängig von einer Betätigung der Eingabevorrichtung des Interface-Geräts Steuersignale und/oder andere Daten an ein Zielgerät auszugeben.

Die Abhängigkeit kann in einer einfachen Ausführungsform derart gegeben sein, dass das Interface-Gerät lediglich Informationen über die Betätigung der Eingabevorrichtung an das Steuergerät verschlüsselt überträgt, wobei das Steuergerät davon abhängig Steuersignale generiert. Im einfachsten Fall ist das Interface-Gerät lediglich als drahtloses zum verschlüsselten Übertragen ausgebildetes Eingabegerät ausgebildet.

Bevorzugt jedoch ist das Interface-Gerät zum Erzeugen und Übertragen von Steuersignale ausgebildet, welche vom Steuergerät vorteilhaft lediglich an ein Zielgerät weitergeleitet werden, wobei das Zielgerät durch das Interface-Gerät mit den übertragenen Daten und/oder Steuersignalen festgelegt wird.

Unter einem Zielgerät wird hier das Gerät verstanden, von dem durch die übertragenen Daten eine Funktion abgerufen werden soll. Beinhalten die Daten beispielsweise die Information, dass die Heizungstemperatur der Sitzheizung erhöht werden soll, wäre das Zielgerät das Gerät welches die Sitzheizungstemperatur reguliert.

Weiterhin ist zu erwähnen, dass das Ausgeben der Daten und/oder Steuersignale erfindungsgemäß nicht zwingend direkt an das Zielgerät erfolgen muss. Gleichfalls ist es möglich, dass vom Interface-Gerät übermittelte und vom Steuergerät empfangene Steuerbefehle über ein oder mehrere zwischengeschaltete Geräte an das Zielgerät weitergeleitet werden.

Vorteilhaft kann auch das Steuergerät zusätzliche Sicherheitsvorrichtungen, wie vorangehend für das Interface-Gerät beschrieben, aufweisen.

In einer vorteilhaften Ausführungsform beinhaltet das Steuergerät zugleich ein Instrument und insbesondere einen Tachographen oder ist als ein solches ausgebildet. Insbesondere eine Ausbildung als Tachograph kann vorteilhaft sein, da Tachographen auf Grund von gesetzlichen Auflagen ohnehin ein hohes Sicherheitsniveau aufweisen. Beispielsweise weisen Tachographen zumeist einen Gehäuseschutz, welcher ein unberechtigtes Öffnen des Gehäuses aufzeichnet, und einen sicheren Datenspeicher auf.

Hierdurch ist der Aufwand zur Herstellung eines als Steuergerät ausgebildeten modifizierten Tachographen deutlich geringer als der zur Herstellung eines Tachographen und eines separaten Steuergeräts.

Der Tachograph oder das Instrument kann vorteilhaft Teil eines Kombigerätes sein, wobei das Interface-Gerät und das Steuergerät vorteilhaft derart ausgelegt sind, dass nicht nur Funktionen von Geräten abgerufen werden können die Teil des gleichen Kombigerätes sind, sondern auch von weiteren, nicht zum selben Kombigerät gehörigen Geräten.

In einer besonders vorteilhaften Ausführungsform wird das Steuergerät durch einen Tachographen und ein lösbar mit einem Tachographen verbindbares Modul zum drahtlosen Datenaustausch mit dem Interface-Gerät gebildet. Die austauschbaren Daten können beispielsweise auch Daten zur Steuerung des Tachographen umfassen. Hierdurch wird eine vom Einbauort unabhängige Bedienung des Tachographen ermöglicht. Außerdem kann das Interface-Gerät eine deutlich höhere Zahl an Bedienmöglichkeiten, beispielsweise bereitgestellt durch im Interface-Gerät integrierte Tasten, aufweisen als der Tachograph. Hierdurch können Funktionen des Tachographen deutlich schneller aufgerufen werden, da eine Betätigung einer einzelnen Taste am Interface-Gerät einer Betätigung einer Mehrzahl von Tasten am Tachographen entsprechen kann. Außerdem kann eine Bedienungsoberfläche und Nutzerführung vorteilhaft vom Nutzer selbst umkonfiguriert werden.

Vorteilhaft können durch das Interface-Gerät Arbeitszeiten und gefahrene Strecken abgefragt werden. Außerdem können Ausdrucke mit vom Tachographen ermittelten Informationen von einem vorteilhaft im Tachographen integrierten Drucker angefordert werden. Gleichzeitig ist eine Nutzung eines im Tachographen integrierten Druckers zum Ausdruck beliebiger anderer Fahrzeuginformationen und/oder weiterer durch das Interface-Gerät eingegebener Informationen möglich. Vorteilhaft können auch jegliche weitere Funktionen des Tachographen über das Interface-Gerät abgerufen werden.

In einer vorteilhaften Ausführungsform ist die lösbare Verbindung zwischen dem Modul und dem Tachographen als K-Linie ausgebildet.

Allgemein kann ein lösbar mit einem im Fahrzeug verbauten Gerät verbindbares Modul zum drahtlosen Datenaustausch mit dem Interface, zusammen mit dem im Fahrzeug verbaute Gerät selbst das Steuergerät bilden. Hierdurch ergibt sich der Vorteil, dass ein bereits im Fahrzeug verbautes Gerät nachgerüstet werden kann um ein Steuergerät für ein erfindungsgemäßes System zu bilden.

In einer besonders bevorzugten Ausführungsform beinhaltet das System eine Andockstation für das Interface. Die Andockstation kann zum Aufladen des Energiespeichers des Interface-Geräts ausgebildet sein. Außerdem kann die Andockstation derart ausgebildet sein, dass beim Verbinden des Interface-Geräts mit der Andockstation die Mittel zum drahtlosen Datenaustausch des Interface-Geräts und des Steuergerätes deaktiviert werden, wobei die Andockstation die Aufgabe des Verbindens von Interface-Gerät und Steuergerät zum Datenaustausch übernimmt.

Ein Verbinden des Interface-Geräts mit der Andockstation ist vorteilhaft durch ein Kabel und/oder durch eine Steckverbindung möglich. Auch ein Verbinden durch Hineinstellen des Interface-Geräts in die Andockstation, wie es beispielsweise bei drahtlosen Festnetztelefonen bekannt ist, ist möglich.

Besonders bevorzugt ist die Andockstation in das Steuergerät integriert. Hierdurch wird eine Notwendigkeit eines zusätzlichen Gerätes vermieden.

Vorteilhaft sind das Steuergerät und das Interface-Gerät derart ausgebildet, dass beim Verbinden des Interface-Geräts mit der Andockstation automatisch Informationen aus dem Nutzerprofil ausgelesen werden. Durch diese Informationen können dann Steuersignale zur Veränderung von Konfigurationen von Einrichtungen im Fahrzeug ausgegeben werden. Hierbei ist eine Steuerung beliebiger nutzerkonfigurierbarer Geräte im Fahrzeug denkbar. Beispielsweise können Einstellungen des Fahrersitzes, der Fahrzeugspiegel, der Sprachsteuerung, der Infotainmentsysteme, der Klimaanlage sowie weiterer Komfort- und Nutzfahrzeugfunktionen verändert werden.

Hierfür ist es nicht zwingend notwendig, dass das Nutzerprofil, wie vorangehend beschrieben, auf einem im Interface-Gerät integrierten Datenspeicher gespeichert ist. Ebenso können ein oder mehrere Nutzerprofile auch im Steuergerät gespeichert sein, wobei der aktuelle Nutzer und damit das zu verwendende Nutzerprofil anhand eines mit Andockstation verbundenen Interface-Geräts automatisch bestimmt werden kann.

In besonders Vorteilhaften Ausführungsform beinhaltet das System eine Mehrzahl von Interface-Geräte, wobei jedes der Interface-Geräte zum Speichern mindestens eines Nutzerprofils ausgebildet sein kann. Somit können eine Bedienerführung und die zum Abrufen einer bestimmten Funktion zu verwendenden Tasten vom verwendeten Interface-Gerät abhängen.

Ausführungsbeispiele der Erfindung werden nachfolgend anhand der Figuren 1 bis 6 näher erläutert. Es zeigen:
- Figur 1:: Skizze einer ersten Ausführungsform eines erfindungsgemäßen Systems im in einen Fahrzeug eingebauten Zustand,
- Figur 2:: Skizze des Interface-Geräts einer zweiten Ausführungsform der Erfindung,
- Figur 3:: Skizze eines dritten erfindungsgemäßen Systems mit in ein Steuergerät integrierter Andockstation,
- Figur 4:: Skizze eines vierten erfindungsgemäßen Systems mit einer separaten Andockstation
- Figur 5:: Skizze eines fünften Ausführungsbeispiels der Erfindung und
- Figur 6:: Skizze einer sechsten Ausführungsform der Erfindung.

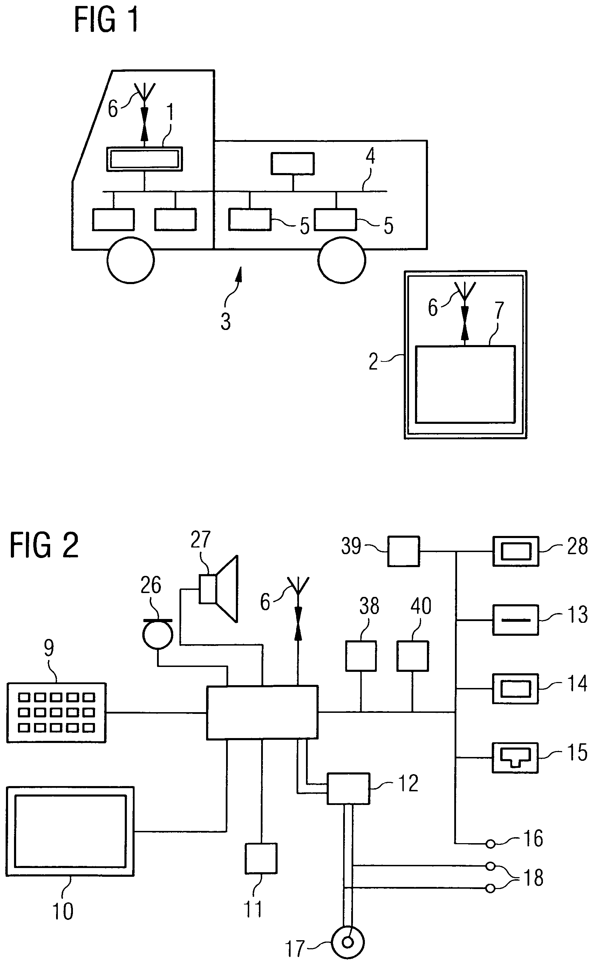

Figur 1 zeigt eine erste Ausführungsform eines erfindungsgemäßen Systems zur mobilen Ansteuerung von Fahrzeugfunktionen. Das System besteht aus einem sicheren Steuergerät 1 und einem Interface-Gerät 2. Das Steuergerät 1 ist im Fahrzeug 3 integriert und über ein im Fahrzeug integriertes Bussystem 4 mit einer Mehrzahl weiterer Steuergeräte 5 verbunden, wobei die weiteren Steuergeräte 5 zumeist keine Sicherheitsfunktionen, wie eine Unterstützung einer verschlüsselten Datenübertragung aufweisen. Sowohl im Steuergerät 1 als auch im Interface-Gerät 2 ist jeweils eine zur kryptologischen Ver- und Entschlüsselung von Daten, beispielsweise durch ein RSA oder DES Verfahren, ausgebildete nicht dargestellte Datenverarbeitungseinheit, sowie Mittel zum drahtlosen Datenaustausch integriert. Die Mittel zum drahtlosen Datenaustausch sind im vorliegenden Ausführungsbeispiel als WLAN-Antenne 6 ausgebildetes und weisen eine Reichweite von 300m auf, sodass auch von außerhalb des Fahrzeugs Fahrzeugfunktionen durch das Interface-Gerät 2 aktiviert werden können. Ebenso wäre eine Ausbildung der Mittel zum drahtlosen Datenaustausch als ZigBee- oder BlueTooth-Schnittstelle möglich. Das Interface-Gerät 2 beinhaltet außerdem eine Eingabe- und eine Anzeigevorrichtung, welche im vorliegenden Ausführungsbeispiel kombiniert als Touchscreen 7 ausgebildet sind.

Durch das Touchscreen 7 können durch das Interface-Gerät 2 über das Steuergerät 1 abrufbare Informationen, beispielsweise bezüglich des Fahrzeugzustands, angezeigt werden.

In einer vereinfachten Ausführungsform kann das Interface-Gerät 2 ohne eine Anzeigevorrichtung ausgebildet sein. In derartigen Ausführungsformen erfolgt ein Anzeigen stattdessen durch eine vorteilhaft im Steuergerät 1 integrierte Anzeigevorrichtung.

Das Interface-Gerät 2 ist dazu ausgebildet, abhängig von Eingaben eines Nutzers über den Touchscreen 7, durch ein kryptologisches Verfahren verschlüsselte und/oder einer Signierung versehene oder unverschlüsselte Steuerbefehle an das Steuergerät 1 zu übertragen. Die Befehle werden vom Steuergerät 1 an die verschiedenen weiteren Steuergeräte 5 weitergeleitet, wobei die Weiterleitung zumeist unverschlüsselt und unsigniert erfolgt.

Erteilt ein Nutzer beispielsweise die Anweisung ein im Fahrzeug vorhandenes Antiblockiersystem (ABS) abzuschalten, so erfolgt die Übertragung des entsprechenden sicherheitsrelevanten Steuerbefehls verschlüsselt und/oder mit einer digitalen Signatur, welche die Authentizität des Interface-Geräts und/oder eines Benutzers sicherstellt an die zur Steuerung des ABS ausgebildete weitere Steuereinheit 5. Hierdurch ist es unbefugten nicht möglich durch ein ähnliches Interface, beispielsweise aus einer gleichen Baureihe, diese sicherheitsrelevante Funktion unberechtigt zu ändern.

Erteilt ein Nutzer hingegen den Befehl eine im Fahrzeug befindliche Klimaanlage anzuschalten, um vor Betreten des Fahrzeugs eine angenehme Innenraumtemperatur zu erzeugen, erfolgt die Ausgabe über die Antenne 6 vorteilhaft unverschlüsselt.

Das Interface-Gerät 2 ist zusätzlich zum schlüssellosen Betätigen des Fahrzeugschließsystems ausgebildet, wofür es vorteilhaft einen nicht dargestellten RFID-Chip beinhaltet. Dieser ist ebenfalls zur Ausführung eines Verschlüsselungsverfahrens ausgebildet, wobei es sich um ein anderes, nicht von der Datenverarbeitungseinheit verwendetes Verfahren handeln kann.

Alternativ kann auch die Fahrzeugschließanlage durch das Interface-Gerät 2 über das Steuergerät 1 betätigt werden ohne dass hierfür ein separater RFID-Chip vorhanden ist. Besonders vorteilhaft ist es, dass die Datenverarbeitungseinheit dazu ausgebildet ist, Steuerbefehle zum Betätigen des Fahrzeugschließsystems mit verringerter Sendeleistung über die Mittel zum drahtlosen Datenaustausch vom Interface-Gerät 2 an das Steuergerät 1 auszugeben, da somit die Reichweite, aus der das Fahrzeugschließsystem aktiviert werden kann, verringert wird. Hierdurch wird es erschwert das Fahrzeug mit einem entwendeten Interface-Gerät 2 aufzuspüren.

Das Steuergerät 1 ist dazu ausgebildet, die eingehenden Steuerbefehle zu verwalten und über das Bussystem 4 an die weiteren Steuergeräte 5 weiterzuleiten. Somit erfüllt das Steuergerät 1 eine Serverfunktion. Außerdem kann das Interface-Gerät 2 dazu ausgebildet sein, Steuerbefehle für an eine Schnittstelle des Fahrzeugs angeschlossene nicht zum Fahrzeug gehörige Vorrichtungen auszugeben, wobei das Steuergerät 1 dazu ausgebildet ist die Steuerbefehle an die vorgenannte Schnittstelle weiterzuleiten.

In alternativen Ausführungsformen kann eine Aufgabenverteilung zwischen Interface-Gerät 2 und Steuergerät 1 verschoben sein, dahingehend, dass vom Interface-Gerät keine vollständigen Steuerbefehle, sondern lediglich Informationen über Betätigungen der als Touchscreen 7 ausgebildeten Eingabevorrichtung an das Steuergerät 1 übermittelt werden. In derartigen Ausführungsformen werden die eigentlichen Steuerbefehle vom Steuergerät 1 erzeugt.

Im vorliegenden Ausführungsbeispiel ist eine Übertragung in beide Richtungen, also vom Interface-Gerät 2 zur Steuereinheit 1 und umgekehrt, möglich. Die Mittel zum drahtlosen Datenaustausch sind also sowohl als Sender als auch als Empfänger ausgebildet. Hierdurch können über das Interface-Gerät Informationen über das Fahrzeug abgerufen werden.

In Figur 2 ist der Aufbau eines Interface-Geräts entsprechend einer zweiten Ausführungsform der Erfindung schematisch Dargestellt. Das Interface-Gerät beinhaltet eine Datenverarbeitungseinheit 8. An diese ist eine Eingabevorrichtung 9, ein Display 10, beispielsweise als Antenne 6 ausgebildete Mittel zum drahtlosen Datenaustausch, ein Datenspeicher 11, ein Energiespeicher 12 sowie ein Mikrofon 26, ein Lautsprecher 27, und eine Schnittstelle 28 zum Auslesen einer SIM-Karte angeschlossen. Außerdem kann die Datenverarbeitungseinheit 8 mit einem Chipkartenlesegerät 13, einem USB-Port 14, einem Anschluss 15 für eine RJ-45 Steckverbindung, einem Fingerabdruckdetektor 38, einem SmardCard-Controller 39, einem Gehäuseeingriffssensor 40 und Kontakten 16 zur Datenverbindung mit einer Andockstation verbunden sein.

Der Energiespeicher 12 ist mit einem Anschluss 17 für ein Ladekabel, sowie Kontakten 18 zum Aufladen über eine Andockstation verbunden.

In diesem Ausführungsbeispiel ist die Datenverarbeitungseinheit 8 mit einer hohen Rechenkapazität ausgebildet. Hierdurch wird es ermöglicht, dass die Datenverarbeitungseinheit 8 einen Teil des Funktionsumfangs oder auch den vollständigen Funktionsumfang des Bordcomputers des Fahrzeugs aufweist. Hierzu zählen beispielsweise das Abrufen von Messwerten von im Fahrzeug integrierten Sensoren sowie das Konfigurieren von verschiedenen Komfortfunktionen.

Außerdem ist die Datenverarbeitungseinheit 8 dazu ausgebildet, zum Mobiltelefonieren notwendige Daten- und Signalverarbeitungsschritte auszuführen. Zusätzlich ist die Antenne 6 zum Verbinden mit einem Mobilfunknetz ausgebildet. Das Interface-Gerät 2 weist vorteilhaft den kompletten Funktionsumfang von nach dem Stand der Technik bekannten Mobiltelefonen auf, sodass das Interface-Gerät ein herkömmliches Mobiltelefon vollständig ersetzt.

Des Weiteren ist die Datenverarbeitungseinheit 8 dazu ausgebildet Steuerbefehle mit einer digitalen Signatur an das Steuergerät zu übermitteln, wobei Steuerbefehle für sicherheitsrelevante Fahrzeugfunktionen vom Steuergerät 1 vorzugsweise nur korrekt Signiert akzeptiert werden. Die digitale Signatur kann vorteilhaft nur dann vollständig erstellt werden, wenn ein Fingerabdruck einer zur Benutzung des Interface-Geräts 2 autorisierten Person durch den Fingerabdruckdetektor 38 erkannt wurde. Insbesondere kann die Signatur Daten über den erfassten Fingerabdruck enthalten. Hierdurch können zur Signatur Daten notwendig sein, die auf dem Interface-Gerät selbst nicht gespeichert sind, sodass mit einem entwendeten Interface-Gerät keine sicherheitsrelevanten Fahrzeugfunktionen gesteuert werden können.

Alternativ oder zusätzlich können zur Erstellung einer Signatur auf einer SmartCard gespeicherte Daten notwendig sein, welche über den SmartCard-Controller 39 eingelesen werden können.

Ein Teil der zur Erstellung einer Signatur notwendigen Daten kann außerdem auf dem Interface-Gerät gespeichert sein. Diese Daten können vorteilhaft automatisch gelöscht werden, wenn der Gehäuseeingriffsensor 40 ein unzulässiges Öffnen eines Gehäuses des Interface-Geräts 2 feststellt. Somit ist auch eine Manipulation des Interface-Geräts ausgeschlossen.

Der Datenspeicher 11 ist im vorliegenden Ausführungsbeispiel als ein Flash-Speicher und insbesondere als ein sicherer Datenspeicher ausgebildet, wobei die Datenverarbeitungseinheit 8 zum verschlüsselten Speichern auf dem Datenspeicher 11 ausgebildet ist.

Auf dem Datenspeicher ist vorteilhaft ein Betriebssystem gespeichert, welches von der Datenverarbeitungseinheit verwendbar ist. Eine Menüführung zur Aktivierung von Fahrzeugfunktionen, sowie weitere Eigenschaften der Nutzeroberfläche können vom Nutzer frei konfiguriert und in ein auf dem Datenspeicher 11 gespeichertes Nutzerprofil gespeichert werden.

Außerdem kann ein Nutzer Voreinstellungen von Fahrzeugfunktionen in das Nutzerprofil speichern. Diese Voreinstellungen von Fahrzeugfunktionen können dann vorteilhaft auf Wunsch des Nutzers an das Steuergerät 1 übertragen werden, welches dann entsprechende Steuerbefehle an die weiteren Steuergeräte 4 weiterleitet.

Beispielsweise können der Fahrersitz und die Einstellungen der Fahrzeugspiegel automatisch dem Fahrer angepasst werden. Außerdem können Sprecherdaten für eine Sprachsteuerung automatisch aus dem Nutzerprofil geladen und an eine im Fahrzeug vorhandene Sprachsteuerung übertragen werden. Auch eine Vorauswahl von gespeicherten Radiosendern kann aus dem Nutzerprofil geladen werden.

Ein derartiges automatisches Konfigurieren des Fahrzeugs bietet vor allem dann Vorteile, wenn ein Fahrer eines Fahrzeugs häufig wechselt, so wie dies bei Firmen der Fall ist, welche eine große Anzahl gleichartiger Fahrzeuge besitzen, wobei beispielsweise aus Auslastungsgründen nicht sichergestellt werden kann, dass der selbe Fahrer immer das selbe Fahrzeug verwendet. In solchen Einsatzbereichen spart ein automatisches Konfigurieren des Fahrzeugs die sonst zum manuellen Konfigurieren notwendige Arbeitszeit, weshalb ein Einsatz eines wie vorangehend beschrieben ausgestalteten Systems erhebliche wirtschaftliche Vorteile mit sich bringt.

Selbstverständlich können auch mehrere Nutzerprofile auf dem Datenspeicher 11 gespeichert werden. Eine Wahl eines Nutzerprofils kann dann beim Einschalten des Interface-Geräts erfolgen und nachträglich beim Betrieb auf Wunsch des Nutzers geändert werden.

Zusätzlich zu dem Betriebssystem und den Nutzerprofilen können auch weitere Daten, beispielsweise Tachographendaten, weitere Fahrzeug bezogene Daten, Daten zur Steuerung von weiteren Fahrzeugfunktionen und/oder Treiber und verbesserte Programme für das Steuergerät 1 oder für weitere Steuergeräte 5, auf dem Datenspeicher 11 gespeichert werden.

Vorteilhaft ist ein Zugriff auf den Datenspeicher 11 auch über die USB-Schnittstelle 14, die RJ45-Schnittstelle 15 oder das Chipkartenlesegerät 13 möglich. Hierdurch können beispielsweise verbesserte und/oder erweiterte Steuerbefehle auf dem Interface-Gerät installiert werden, welches nachfolgend einen weiter vergrößerten Funktionsumfang aufweist.

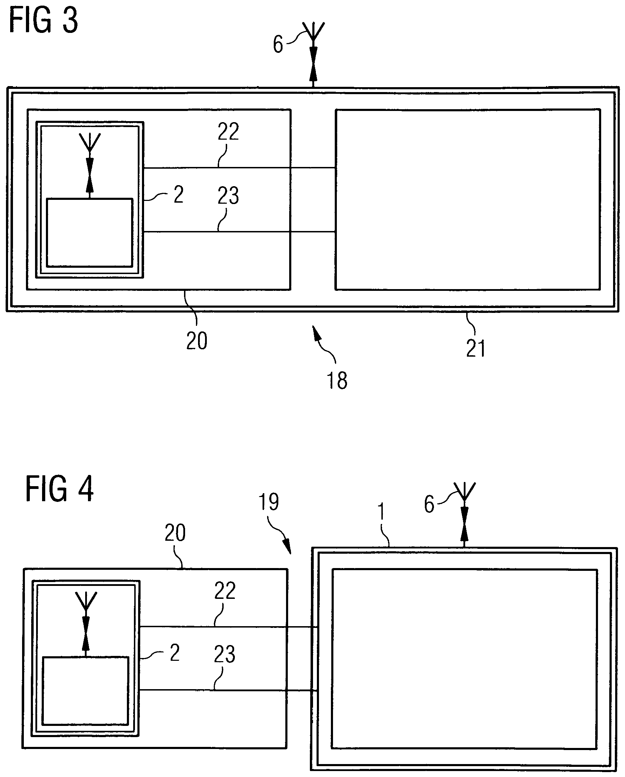

In den in den Figuren 3 und 4 gezeigten Ausführungsformen sind Systeme 18, 19 zur mobilen Ansteuerung von Fahrzeugfunktionen gezeigt. Beide Systeme beinhalten jeweils eine Andockstation 20. Die beiden gezeigten Systeme unterscheiden sich dadurch, dass in der in Figur 3 gezeigten Ausführungsform eine im Steuergerät 21 integrierte Andockstation 20 verwendet wird, während in Figur 4 eine separate, jedoch über eine Strom- 22 und eine Datenverbindung 23 mit dem Steuergerät 1 verbundene Andockstation 21 gezeigt ist.

In beiden Ausführungsformen werden die als Antenne 6 ausgebildeten Mittel zum drahtlosen Datenaustausch beim Einfügen des Interface-Geräts 2 in die Andockstation 21 automatisch zumindest teilweise deaktiviert, wobei deren Funktion, nämlich das Herstellen einer Verbindung zur Übermittelung von Daten zwischen Interface-Gerät 2 und Steuergerät 1, 21, durch die Datenverbindung 23 übernommen wird. Ein zum Verbinden mit einem Mobilfunknetz dienender Teil der Mittel zum drahtlosen Datenaustausch kann aktiviert bleiben. Ist eine außen am Fahrzeug angebrachte Mobilfunkantenne mit dem Steuergerät 1, 21 verbunden kann auch dieser Teil der Mittel zum drahtlosen Datenaustausch deaktiviert werden.

Außerdem werden beim Einfügen des Interface-Geräts 2 in die Andockstation 20 automatisch die im Nutzerprofil gespeicherten Einstellungen an das Steuergerät 21, 1 übermittelt wodurch das Fahrzeug wie vorangehend beschrieben vorkonfiguriert werden kann.

Zusätzlich kann das Interface-Gerät 2, welches wie vorangehend beschrieben vorteilhaft als Mobiltelefon ausgebildet ist, über die Andockstation 20 eine Verbindung mit einer im Fahrzeug vorhandenen Freisprecheinrichtung herstellen, sodass eine separate Andockstation für ein Mobiltelefon unnötig wird.

Des Weiteren kann das Interface-Gerät auch einen Zündschlüssel und die Andockstation ein Zündschloss ersetzen, derart dass ein Starten des Fahrzeug durch das Interface-Gerät freischaltbar ist, sobald das Interface-Gerät mit der Andockstation verbunden wird.

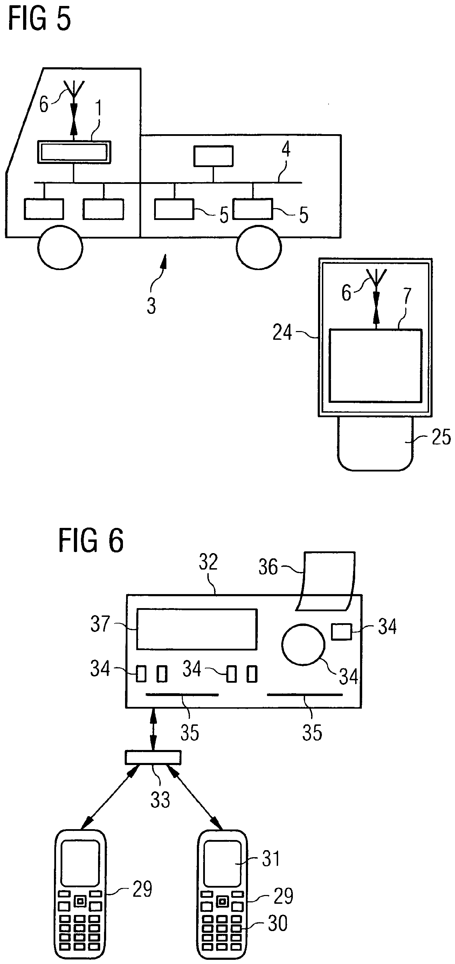

Figur 5 zeigt eine Ausführungsform der Erfindung bei der das Interface-Gerät 24 eine zusätzliche Schnittstelle beinhaltet. Im vorliegenden Ausführungsbeispiel ist die zusätzliche Schnittstelle als ISO7816-Schnittstelle 25 zum Lesen und/oder Beschreiben von Chipkarten ausgebildet. Insbesondere können durch die Schnittstelle 25 Fahrerkarten, Kontrollkarten, Bankkarten und/oder Fuhrparkkarten ausgelesen werden. Je nach eingefügter Karte können verschiedene zusätzliche Funktionen ermöglicht werden. Wird eine Fahrerkarte in die Schnittstelle 25 eingefügt kann beispielsweise auf dieselben Fahrerbezogenen Daten zugegriffen werden, die sonst über einen Tachographen bei eingesteckter Fahrerkarte abrufbar währen. Wird eine Bankkarte eingefügt, können Zahlungsvorgänge über das Interface-Gerät abgewickelt werden. Bei Ausbildung des Interface-Geräts als Mobiltelefon mit Internetzugang oder bei Verwendung in Kombination mit einem Fahrzeug, welches einen drahtlosen Internetanschluss beinhaltet, ist auch mobiles Onlinebanking möglich.

In einer weiteren Ausführungsform wird ein Ansteuern und/oder Konfigurieren bestimmter weiterer Steuergeräte 5 erst durch Einschieben bestimmter Chipkarten in die Schnittstelle 25 ermöglicht. Beispielsweise kann ein Zugriff auf eine Steuerung für einen zum Fahrzeug gehörigen Kranaufbau und/oder Kühlaggregate und/oder Audioanlagen nur dann möglich sein, wenn eine Speziell dazu vorgesehene Chipkarte in die Schnittstelle 25 eingesteckt ist.

Ebenso kann es vorteilhaft sein, dass zum Freischalten jeglicher Steuerungsmöglichkeiten des Interface-Geräts 24 eine bestimmte Chipkarte eingesteckt sein muss. Zu diesen Steuermöglichkeiten kann auch die Betätigung einer Schließanlage des Fahrzeugs gehören. Dies ist insbesondere von Vorteil weil hierdurch das Risiko eines Fahrzeugdiebstahls oder unberechtigten Zugriffs auf das Fahrzeug bei Verlust oder Diebstahl des Interface-Geräts reduziert wird, da nur mit dem Interface-Gerät in Kombination mit der Chipkarte ein Öffnen des Fahrzeugs möglich ist.

Alternativ kann ein Einstecken einer bestimmten Chipkarte nur zum Softwareupdate von weiteren Steuergeräten 5 notwendig sein.

Ist die eingesteckte Chipkarte personenspezifisch impliziert das Einstecken dieser Chipkarte die Verwendung des Interface-Geräts durch eine bestimmte Person. Daher kann dann automatisch ein zu dieser Person gehöriges Nutzerprofil geladen werden. Ein Beispiel einer derart personenspezifischen Chipkarte ist eine Fahrerkarte.

In Figur 6 ist ein weiteres Ausführungsbeispiel eines erfindungsgemäßen Systems dargestellt. Dieses besteht aus zwei Interface-Geräte 29, welche ein Eingabefeld 30 und ein Display 31 beinhalten und ansonsten jeweils wie das Interface-Gerät aus dem ersten Ausführungsbeispiel ausgebildet sein können, sowie einem aus einem Tachographen 32 und einem mit dem Tachographen 32 über eine K-Linie verbundenen Empfangsmodul 33 bestehenden Steuergerät. Bei dieser Ausführungsform kann es sich bei den Tachographen 32 um einen herkömmlichen Tachographen wie nach dem Stand der Technik bekannt handeln. Alternativ kann ein Tachograph oder Instrumentencluster mit integriertem Empfangsmodul als Steuergerät verwendet werden.

Der Tachograph 32 weist eine Mehrzahl von Bedienelementen 34, Schnittstellen 35 für Fahrer und/oder Fuhrparkkarten, einen Drucker 36 und ein Display 37 auf. Beide Interface-Geräte sind jeweils zur Steuerung jeglicher Funktionen des Tachographen 32 ausgebildet und dienen zusätzlich zum Steuern mehrerer weiterer Fahrzeugfunktionen sowie in den vorangehenden Ausführungsbeispielen beschrieben. In diesem Ausführungsbeispiel dient der Tachograph 32 als Server.

Die Eingabefelder 30 der Interface-Geräts 29 beinhalten jeweils eine größere Anzahl von Bedienelementen als der Tachograph 32, sodass Tachographenfunktionen durch die Interface-Geräte vorteilhaft durch eine verringerte Zahl von Betätigungen von Bedienelementen aufgerufen werden können.

Der im Tachographen 32 integrierte Drucker 36 kann über die Interface-Geräte 29 angesteuert werden, wobei auch beliebige nicht den Tachographen betreffende Daten ausgedruckt werden können. Beispielsweise kann über die Interface-Geräte eine Selbstüberprüfung einer Mehrzahl von im Fahrzeug verbauten Geräten gestartet werden, wobei die Ergebnisse über den Drucker 36 ausgedruckt werden können.

## Patentansprüche

1. System zur mobilen Ansteuerung von Fahrzeugfunktionen mit einem Mobilen Interface-Gerät (2) zur Steuerung einer Mehrzahl von Fahrzeugfunktionen eines Kraftfahrzeug (3) über ein mit dem Fahrzeug (3) verbundenes Steuergerät (1), mit Mitteln (6) zum drahtlosen Datenaustausch mit einem Steuergerät, einer Eingabevorrichtung (9) und einem Energiespeicher (12), wobei die Mittel (6) zum drahtlosen Datenaustausch mit einer im mobilen Interface-Gerät (2) integrierten Datenverarbeitungseinheit (8) verbunden ist, welche zur Anwendung mindestens eines kryptologischen Verfahrens ausgebildet ist,
**dadurch gekennzeichnet, dass** das mobile Interface-Gerät zur Verwendung einer Mehrzahl verschiedener kryptologischer Verfahren ausgebildet ist, wobei eine Wahl eines für eine Übermittlung eines bestimmten Datensatz verwendeten kryptologischen Verfahrens von dem bestimmten Datensatz abhängt, wobei an die Datenverarbeitungseinheit (8) eine im Interface-Gerät (2) integrierte Schnittstelle (28) zum Auslesen und/oder Beschreiben von Karten und/oder mobilen Speichermedien angeschlossen ist, welche als Leseeinheit zum Lesen von Fahrerkarten ausgebildet ist.

2. System nach Anspruch 1, **dadurch gekennzeichnet, dass** das Steuergerät (1) ein Tachograph umfasst.

3. System nach Anspruch 1, **dadurch gekennzeichnet, dass** im Interface-Gerät (2) eine Anzeigevorrichtung (7) integriert ist.

4. System nach einem der vorangehenden Ansprüche, **dadurch gekennzeichnet, dass** das Interface-Gerät (2) einen Datenspeicher (11) beinhaltet.

5. System nach einem der vorangehenden Ansprüche,
**dadurch gekennzeichnet, dass** die Datenverarbeitungseinheit (8) zum Übermitteln von Steuerbefehlen für weitere an das Fahrzeug angeschlossene Vorrichtungen über die Mittel zum drahtlosen Datenaustausch an ein Steuergerät (5) ausgebildet ist.

6. System nach einem der vorangehenden Ansprüche,
**dadurch gekennzeichnet, dass** die Datenverarbeitungseinheit (8) mit mindestens einer im Interface-Gerät (2) integrierten zusätzlichen Sicherheitsvorrichtung verbunden ist, die als Gehäuseschutz, Smart-Card-Controller (39), Fingerabdruckdetektor (38) oder Irisscanner ausgebildet ist.

7. System nach einem der vorangehenden Ansprüche,
**dadurch gekennzeichnet, dass** die Datenverarbeitungseinheit (8) dazu ausgebildet ist zumindest ein kryptologisches Verfahren nicht ausschließlich zur Übermittlung von Steuerbefehlen zur Betätigung eines Fahrzeugschließsystems zu verwenden.

8. System nach einem der vorangehenden Ansprüche,
**dadurch gekennzeichnet, dass** die Datenverarbeitungseinheit (8) zur Ansteuerung und Aktivierung von Funktionen des Bordcomputers und/oder zur Übernahme von Funktionen des Bordcomputers ausgebildet ist.

9. System nach einem der vorherigen Ansprüche,
**dadurch gekennzeichnet, dass** das Interface-Gerät (2) ausgeführt ist auf Funktionen zuzugreifen ohne Identifizierung durch einen Schlüssel.

10. System nach einem der vorherigen Ansprüche und einem mit dem Fahrzeug verbundenen oder verbindbaren Steuergerät (1) zum Datenaustausch mit dem Interface-Gerät (2) unter Verwendung kryptologischer Verfahren, wobei das Steuergerät (1) zum Ausgeben von Steuersignalen an Zielgeräte abhängig von einer Betätigung des Interface-Gerätes ausgebildet ist.

11. System nach Anspruch 10, **dadurch gekennzeichnet, dass** das System eine Andockstation (20) umfasst.

12. System nach Anspruch 11, **dadurch gekennzeichnet, dass** die Andockstation (20)und das Interface-Gerät zum Verbinden durch eine Kabel und/oder Steckverbindung miteinander ausgebildet sind.

13. System nach einem der Ansprüche 10 bis 12,
**dadurch gekennzeichnet, dass** das System mindestens zwei Interface-Geräte (29) beinhaltet.

## Claims

1. System for mobile actuation of vehicle functions having a mobile interface device (2) for controlling a plurality of vehicle functions of a motor vehicle (3) using a controller (1) connected to the vehicle (3), having means (6) for wireless data interchange with a controller, an input apparatus (9) and an energy store (12), wherein the means (6) for wireless data interchange are connected to a data processing unit (8) that is integrated in the mobile interface device (2) and that is designed to apply at least one cryptological method,
**characterized in that** the mobile interface device is designed to use a plurality of different cryptological methods, wherein a selection of a cryptological method used for transmitting a particular data record is dependent on the particular data record, the data processing unit (8) having connected to it an interface (28), integrated in the interface device (2), for reading and/or writing to cards and/or mobile storage media, which interface is in the form of a reading unit for reading driver cards.

2. System according to Claim 1, **characterized in that** the controller (1) comprises a tachograph.

3. System according to Claim 1, **characterized in that** the interface device (2) has a display apparatus (7) integrated in it.

4. System according to one of the preceding claims, **characterized in that** the interface device (2) contains a data memory (11).

5. System according to one of the preceding claims, **characterized in that** the data processing unit (8) is designed to transmit control commands for further apparatuses connected to the vehicle to a controller (5) via the means for wireless data interchange.

6. System according to one of the preceding claims, **characterized in that** the data processing unit (8) is connected to at least one additional security apparatus that is integrated in the interface device (2) and that is in the form of housing protection, a smart card controller (39), a finger print detector (38) or an iris scanner.

7. System according to one of the preceding claims, **characterized in that** the data processing unit (8) is designed to use at least one cryptological method not exclusively to transmit control commands for operating a vehicle locking system.

8. System according to one of the preceding claims, **characterized in that** the data processing unit (8) is designed to actuate and activate functions of the onboard computer and/or to undertake functions of the onboard computer.

9. System according to the one of the preceding claims, **characterized in that** the interface device (2) is designed to access functions without identification by means of a key.

10. System according to one of the preceding claims and a controller (1), connected or connectable to the vehicle, for data interchange with the interface device (2) using cryptological methods, wherein the controller (1) is designed to output control signals to target appliances on the basis of operation of the interface device.

11. System according to Claim 10, **characterized in that** the system comprises a docking station (20).

12. System according to Claim 11, **characterized in that** the docking station (20) and the interface device are designed for connection to one another by means of a cable and/or a plug connection.

13. System according to one of Claims 10 to 12,
**characterized in that** the system contains at least two interface devices (29) .

## Revendications

1. Système de commande mobile de fonctions de véhicule comportant un appareil d'interface mobile (2) permettant de commander une pluralité de fonctions de véhicule d'un véhicule automobile (3) par l'intermédiaire d'un appareil de commande (1) relié au véhicule (3), des moyens (6) d'échange de données sans fil avec un appareil de commande, un dispositif de saisie (9) et un accumulateur d'énergie (12), dans lequel les moyens (6) d'échange de données sans fil sont reliés à une unité de traitement de données (8) qui est intégrée à l'appareil d'interface mobile (2) et est conçue pour appliquer au moins un procédé cryptologique,
**caractérisé en ce que** l'appareil d'interface mobile est conçu pour utiliser une pluralité de procédés cryptologiques différents, dans lequel le choix d'un procédé cryptologique utilisé pour la transmission d'un jeu de données déterminé dépend du jeu de données déterminé, dans lequel une interface (28) intégrée à l'appareil d'interface (2), permettant une lecture et/ou une écriture depuis ou sur des cartes et/ou des supports de stockage mobiles, et qui est réalisée sous la forme d'un lecteur de cartes routières, est reliée à l'unité de traitement de données (8).

2. Système selon la revendication 1, **caractérisé en ce que** l'appareil de commande (1) comprend un tachygraphe.

3. Système selon la revendication 1, **caractérisé en ce qu'**un dispositif d'affichage (7) est intégré à l'appareil d'interface (2).

4. Système selon l'une quelconque des revendications précédentes, **caractérisé en ce que** l'appareil d'interface (2) comprend une mémoire de données (11).

5. Système selon l'une quelconque des revendications précédentes, **caractérisé en ce que** l'unité de traitement de données (8) est conçue pour transmettre à un appareil de commande (5) des ordres de commande destinés à d'autres dispositifs raccordés au véhicule par l'intermédiaire des moyens d'échange de données sans fil.

6. Système selon l'une quelconque des revendications précédentes, **caractérisé en ce que** l'unité de traitement de données (8) est reliée à au moins un dispositif de sécurité supplémentaire intégré à l'appareil d'interface (2), qui est réalisé sous la forme d'une protection de boîtier, d'un contrôleur de carte à puce (39), d'un détecteur d'empreintes digitales (38) ou d'un lecteur d'iris.

7. Système selon l'une quelconque des revendications précédentes, **caractérisé en ce que** l'unité de traitement de données (8) est conçue pour utiliser au moins un procédé cryptologique destiné non exclusivement à transmettre des ordres de commande permettant d'actionner un système de verrouillage de véhicule.

8. Système selon l'une quelconque des revendications précédentes, **caractérisé en ce que** l'unité de traitement de données (8) est conçue pour commander et activer des fonctions de l'ordinateur de bord et/ou pour reprendre des fonctions de l'ordinateur de bord.

9. Système selon l'une quelconque des revendications précédentes, **caractérisé en ce que** l'appareil d'interface (2) est conçu pour accéder à des fonctions sans identification par l'intermédiaire d'une clé.

10. Système selon l'une quelconque des revendications précédentes et comportant un appareil de commande (1) relié ou pouvant être relié au véhicule pour l'échange de données avec l'appareil d'interface (2) par utilisation de procédés cryptologiques, dans lequel l'appareil de commande (1) est conçu pour délivrer des signaux de commande à des appareils cibles en fonction d'un actionnement de l'appareil d'interface.

11. Système selon la revendication 10, **caractérisé en ce que** le système comprend une station d'accueil (20).

12. Système selon la revendication 11, **caractérisé en ce que** la station d'accueil (20) et l'appareil d'interface sont conçus pour être reliés l'un à l'autre par un câble et/ou un connecteur.

13. Système selon l'une quelconque des revendications 10 à 12, **caractérisé en ce que** le système comprend au moins deux appareils d'interface (29).
